# EUROPEAN PATENT APPLICATION

(11) **EP 4 566 952 A1**
(43) Date of publication of application: **11.06.2025**
(21) Application number: 24216162.8
(22) Date of filing: 28.11.2024
(51) Int. Cl.: B64G 1/64, B64G 4/00

(54) **SYSTEM AND METHOD FOR A SCALABLE ROBOTICALLY-COMPATIBLE PAYLOAD LOGISTICS INTERFACE**

(30) Priority: 08.12.2023 US 202363607901 P
(71) Applicant: MacDonald, Dettwiler and Associates Inc., Brampton, Ontario L6Y 6K7 (CA)
(72) Inventor: Ker, Heather, Brampton, Ontario, L6Y 6K7 (CA); Pop, Alin, Brampton, Ontario, L6Y 6K7 (CA); Gryniewski, Lawrence, Brampton, Ontario, L6Y 6K7 (CA); Cunningham, James, Brampton, Ontario, L6Y 6K7 (CA); Dowling, Sean, Brampton, Ontario, L6Y 6K7 (CA); Larouche, Steve, Brampton, Ontario, L6Y 6K7 (CA)
(74) Representative: Grünecker Patent- und Rechtsanwälte PartG mbB

(57) **Abstract**

A system and method for robotic interfacing is provided herein. The robotic system includes a payload interface comprising a platform side and a receptacle side. The platform side is robotically maneuverable, and adaptable to carry a payload. The receptacle side is affixed to a host structure. The payload interface is autonomously removed and replaced by a robotic manipulator. The robotic manipulator includes an end effector having a grapple mechanism that connects with a grapple fixture of the platform side.

## Description

### Technical Field

The following relates generally to robotic systems, and more particularly to systems and methods for payload interfaces for robotic systems.

### Introduction

Current challenges include the need to standardize a set of robotic interfaces that can accommodate payloads of various sizes and masses.

As humanity is present in deep space, the need for robotic systems that can be controlled by autonomous systems is increasing. Current systems necessitate an increase in interface autonomy due to reduced communication and limited autonomous availability, in this remote setting.

Additionally, lessons have been learned from international space missions where non-standard robotic payloads have necessitated costly, on-going design, analyses and mission operations planning through sustaining engineering. The philosophy of standardizing robotic payload handling is an effort to streamline and minimize the amount of sustaining engineering and operations planning throughout space missions.

Accordingly, there is a need for an improved system and method for robotic system interfaces that overcomes at least some of the disadvantages of existing systems and methods.

### Summary

Provided is a system that leverages an existing, robotically-compatible alignment and berthing interface to produce a scalable orbital replaceable interface that can be sized to take larger/smaller payloads during launch and still make use of the same relocatability on-orbit.

Provided is a robotic system comprising a payload interface comprising a platform side and a receptacle side. The platform side is robotically maneuverable and adaptable to carry a payload. The receptacle side is affixed to a host structure.

The payload interface may be autonomously removed and replaced by a robotic manipulator.

The robotic manipulator may include an end effector having a grapple mechanism that connects with a grapple fixture of the platform side.

The grapple mechanism may include a latching mechanism that grapples a grapple probe of the grapple fixture.

The grapple mechanism may include alignment features that align with alignment features of the grapple fixture.

The end effector may include a torque mechanism for providing torque to a tie down bolt of the platform side.

The platform side may include the tie down bolt which ties down to a tie down bolt receiver/receptacle of the receptacle side.

The end effector may include a vision system that images a vision target of the receptacle side to aid in manipulation of the platform side.

The platform side may include alignment features that align with receptacle alignment features of the alignment side. The alignment features may include a wedge mating interface that mates with the wedge mating interface of the alignment feature.

The platform side may include electrical connectors that electrically connect to electrical connectors of the receptacle side to transmit power and/or data.

The robotic system may be used for robotic mating/de-mating of interfaces in space applications or nuclear applications.

The robotic system may further include an auxiliary services interface that mates and de-mates a plurality of any one or more of fluid lines and electrical connectors between the host structure and the payload.

The robotic system may further include a family of payload interfaces.

Provided is a method for mating and de-mating a robotic system. The method includes maneuvering a payload to a receptacle side to which the payload is to be installed to make contact, once initial contact is made, a platform is driven inward, once the platform is within an envelope of a robotic system tie-down mechanism, an end effector torquer drive will rotate a tie-down bolt.

The method may further include positioning an end effector within a grapple fixture.

The method may further include engaging the end effector to the grapple fixture.

The method may further include rigidizing the end effector to the grapple fixture.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a robotic system, according to an embodiment;
Figure 2 is a block diagram of a robotic interface of the robotic system of Figure 1;
Figures 3A, 3B, and 3C are engaged and perspective views of a robotic system, in accordance with an embodiment;
Figures 4A and 4B are engaged and perspective views of a robotic system, in accordance with an embodiment;
Figure 5 is a perspective view of a robotic system, in accordance with an embodiment;
Figure 6 is a perspective view of a robotic system, in accordance with an embodiment;
Figures 7A and 7B illustrate a robotic interface, in accordance with an embodiment;
Figures 8A and 8B illustrate a robotic interface, in accordance with an embodiment;
Figure 9 is a flow chart of a method for a robotic system, in accordance with an embodiment;
Figure 10 is a flow chart of a method for a robotic system, in accordance with an embodiment; and
Figure 11 is a flow chart of a method for a robotic system, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

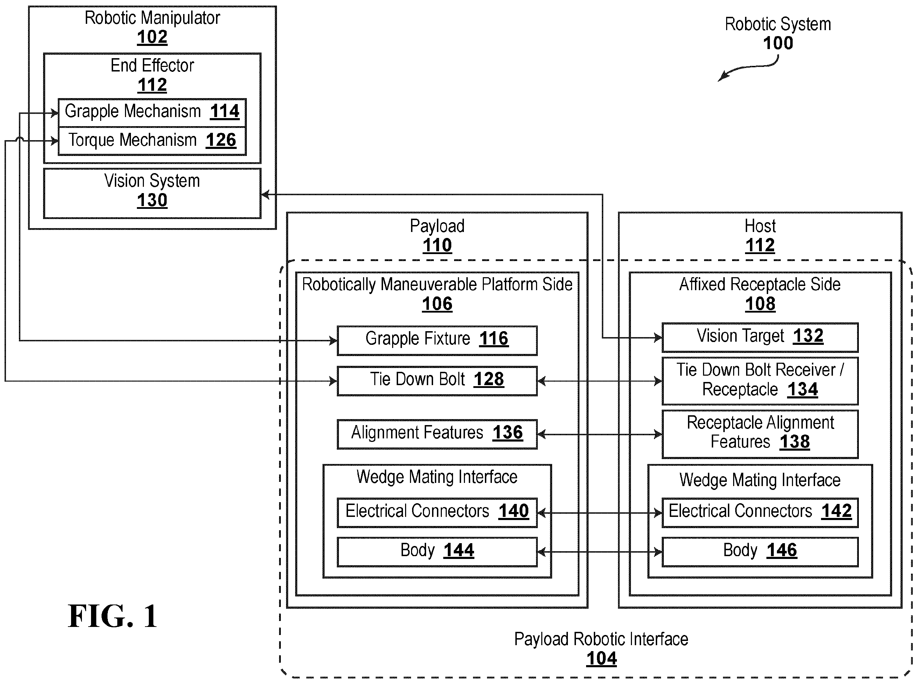

Referring now to Figure 1, shown therein is a robotic system 100, in accordance with an embodiment. The robotic system 100 includes a set of payload interfaces that can be autonomously removed and replaced by extra-vehicular robotics (EVR).

The robotic system 100 includes a manipulator 102 and a payload interface 104. The payload interface 104 includes a platform side 106 and a receptacle side 108. The platform side 106 is robotically maneuverable, for example by the manipulator 102. A payload 110 is mounted to the platform 106. The receptacle side 108 is affixed to a host structure 112 (e.g., spacecraft platform or other structure on a spacecraft). The payload interface 104 can be autonomously removed and replaced by robotic manipulator 102 or other robotic system, such as extra-vehicular robotics (EVR).

The payload 110 may be mounted directly to the platform side 106 or mounted to a payload platform that receives the payload and the platform side 106 is connected/coupled/mounted (payload 110 is indirectly mounted to the platform side 106).

The robotic system 100 may be used for robotic mating/de-mating of interfaces in different industries including space applications and nuclear applications.

The robotic manipulator 102 includes an end effector 112 having a grapple mechanism 114 that connects with a grapple fixture 116 of the platform side 106.

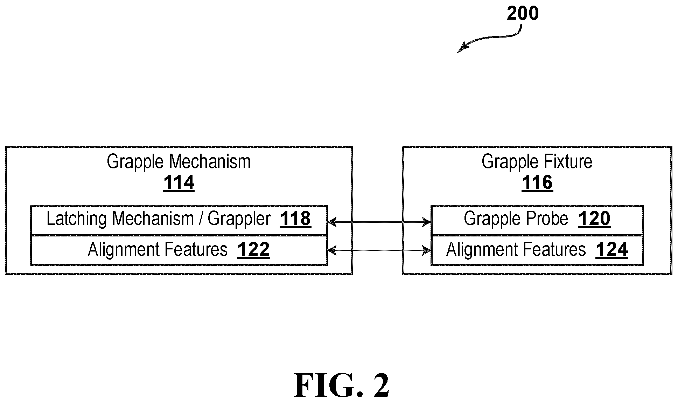

Referring to Figure 2, illustrated there in is an interface 200 between the grapple mechanism 114 and the grapple fixture 116. The grapple mechanism 114 includes a latching mechanism or grappler 118 that grapples a grapple probe 120 of the grapple fixture 116. The grapple mechanism 114 includes alignment features 122 that align with alignment features 124 of the grapple fixture 116.

Turning again to Figure 1, the end effector 112 also includes a torque mechanism 126 for providing torque to a tie down bolt 128 of the platform side 106.

The end effector 112 also includes a vision system 130, such as a camera that images the robotic interface 104 including the platform side 106 and the receptacle side 108. The receptacle side 108 include a vision target 132 that is imaged and recognized by the vision system 130 of the robotic manipulator 102.

The platform side 106 includes the tie down bolt 128 which ties down to a tie down bolt receiver/receptacle 134 of the receptacle side 108.

The platform side 106 includes alignment features 136 that align with receptacle alignment features 138. The alignment features 136 may include a wedge mating interface. The receptacle alignment features 138 may include a wedge mating interface that mates with the wedge mating interface of the alignment feature 136.

The alignment features 136 supports a family of reusable payload interfaces using a single robotically-compatible alignment feature/tiedown. The payload interface family allows for a range of payload masses/inertias to be launched and then relocated repeatedly while relying on only one robotically compatible feature.

The alignment feature 138 allows for the scaling up the payload accommodation for volume and mass. As the payload increases in volume and/or mass, the number/location of hold downs for stiffness and strength during launch is also scaled up.

The system includes an auxiliary services module. The auxiliary services module includes any one or more of nominal electrical power, data, and mechanical power. The auxiliary services module includes any one or more of auxiliary services including pressurant connections, fluid connections, and high-power electrical conductors.

The platform side 106 include electrical connectors 140 that electrically connect to electrical connectors 142 of the receptacle side 108.

The platform side 106 includes a platform body 144 that connects the components of the platform side 106. The receptacle side 108 includes a receptacle body 146 that connects the components of the receptacle side 108.

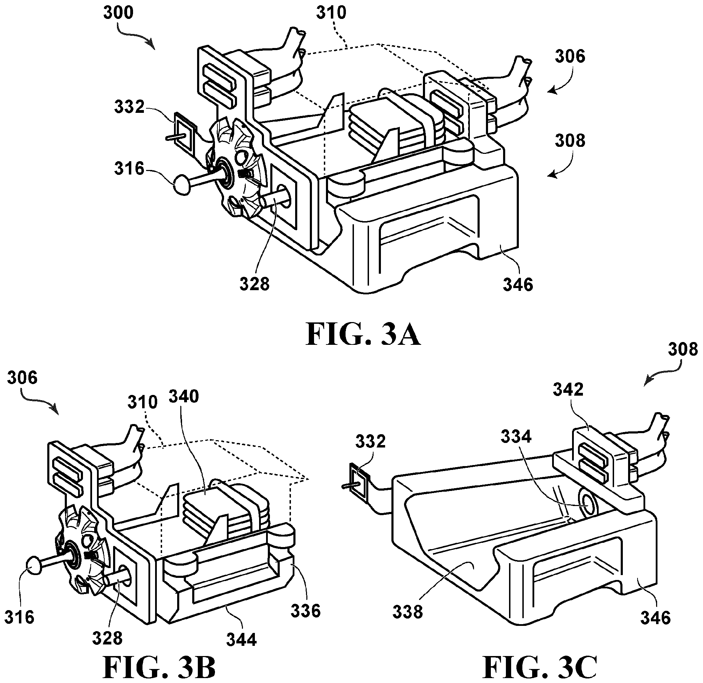

Turning to Figures 3A, 3B, and 3C, illustrated therein is a robotic system 300, in accordance with an embodiment. The robotic system 300 is a relatively small orbital replacement unit launch that contains no hold down release mechanisms (HRMs). Payloads (not shown) may be affixed directly to the robotic system 300. The robotic system 300 may be the robotic system 100 as described with reference to Figures 1 and 2.

The robotic system 300 includes a platform side 306 and a receptacle side 308. Figure 3A illustrates the robotic system 300 in an engaged position where the platform side 306 is mated to the receptacle side 308. Figure 3B illustrates the platform side 306 in isolation. Figure 3C illustrates the receptacle side 306 in isolation.

The platform side 306 is robotically maneuverable, for example by a robotic manipulator. A payload 310 is mounted to the platform 106. The receptacle side 108 may be affixed to a host structure (e.g., spacecraft platform or other structure on a spacecraft). The robotic system 300 can be autonomously removed and replaced by the robotic manipulator or other robotic system, such as extra-vehicular robotics (EVR).

The payload 310 may be mounted directly to the platform side 306 or mounted to a payload platform that receives the payload and the platform side 306 is connected/coupled/mounted (payload 310 is indirectly mounted to the platform side 306).

The platform side 106 includes a grapple fixture 316 that interfaces with an end effector of the robotic manipulator. The platform side 306 includes a tie down bolt 328 which ties down to a tie down bolt receiver/receptacle 334 of the receptacle side 308. The tie down bolt 328 is torqued by the robotic manipulator to turn the tie down bolt 328 so that the tie down bolt connects to the tie down bolt receiver 334 of the receptacle side 308.

The robotic manipulator includes a vision system, such as a camera that images the platform side 306 and/or the receptacle side 308. The receptacle side 308 includes a vision target 332 that is imaged and recognized by the vision system of the robotic manipulator.

The platform side 306 includes alignment features 336 that align with receptacle alignment features 338. The alignment features 336 may include a wedge mating interface. The receptacle alignment features 338 may include a wedge mating interface that mates with the wedge mating interface of the alignment feature 336.

The platform side 306 include electrical connectors 340 that electrically connect to electrical connectors 342 of the receptacle side 308.

The platform side 306 includes a platform body 344 that connects the components of the platform side 306. The receptacle side 308 includes a receptacle body 346 that connects the components of the receptacle side 308.

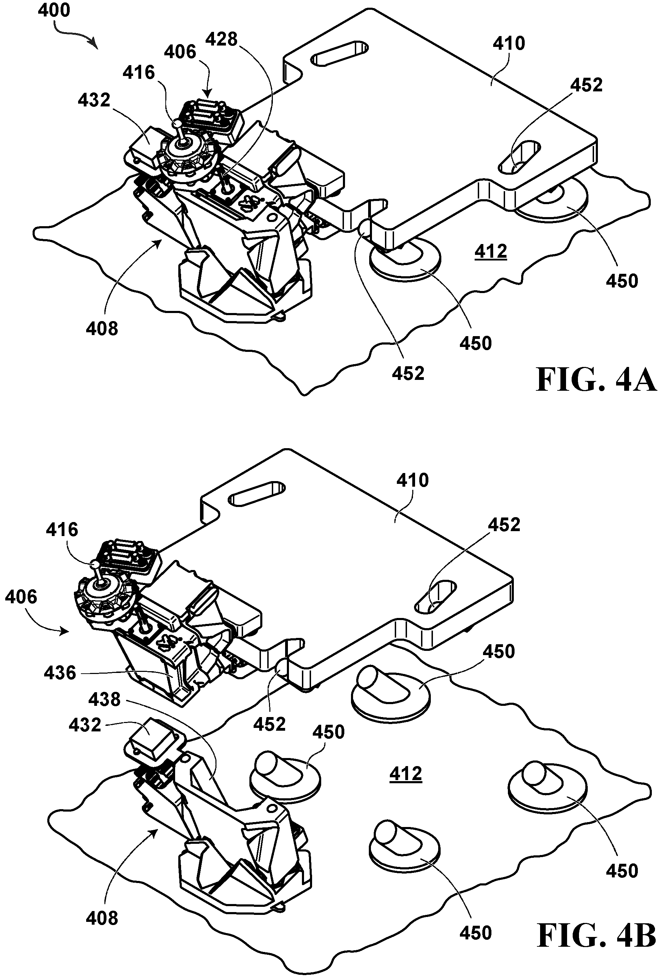

Turning to Figures 4A and 4B, illustrated therein is a robotic system 400, in accordance with an embodiment. The robotic system 400 may be a relatively small orbital replacement unit launch. The robotic system 400 includes a payload robotic interface, a platform payload 410, and a plurality of hold down release mechanisms 450. The robotic system 400 may be the robotic system 100 as described with reference to Figures 1 and 2.

The robotic system 400 includes a platform side 406 and a receptacle side 408. Figure 4A illustrates the robotic system 400 in an engaged position where the platform side 406 is mated to the receptacle side 408. Figure 4B illustrates the platform side 406 and the receptacle side 406 in a separated position.

The platform side 406 is robotically maneuverable, for example by a robotic manipulator. The payload 410 is mounted to the platform 406. The receptacle side 408 may be affixed to a host structure (e.g., spacecraft platform or other structure on a spacecraft). The robotic system 400 can be autonomously removed and replaced by the robotic manipulator or other robotic system, such as extra-vehicular robotics (EVR).

The receptacle side 408 includes the plurality of hold down release mechanisms 450 mounted on a payload platform 412.

The payload 410 includes a plurality of hold down release mechanisms 452 that connect to the hold down release mechanisms 450 of the receptacle side 408.

When the platform side 406 is manipulated from the engaged position (Figure 4A) to the separated position (Figure 4B), the hold down release mechanisms 450, 452 disengage from each other, and the platform 410 is released from the payload platform 412.

When the platform side 406 is manipulated from the separated position (Figure 4B) to the engaged position (Figure 4A), the hold down release mechanisms 450, 452 engage with each other, and the platform 410 is secured to the payload platform 412.

The platform side 406 includes a grapple fixture 416 that interfaces with an end effector of the robotic manipulator. The platform side 406 includes a tie down bolt 428 which ties down to a tie down bolt receiver/receptacle of the receptacle side 408. The tie down bolt 428 is torqued by the robotic manipulator to turn the tie down bolt 428 so that the tie down bolt connects to the tie down bolt receiver of the receptacle side 408.

The robotic manipulator includes a vision system, such as a camera that images the platform side 406 and/or the receptacle side 408. The receptacle side 408 includes a vision target 432 that is imaged and recognized by the vision system of the robotic manipulator.

The platform side 406 includes alignment features 436 that align with receptacle alignment features 438. The alignment features 436 may include a wedge mating interface. The receptacle alignment features 438 may include a wedge mating interface that mates with the wedge mating interface of the alignment feature 436.

The platform side 406 include electrical connectors that electrically connect to electrical connectors of the receptacle side 408. The platform side 406 includes a platform body that connects the components of the platform side 406. The receptacle side 408 includes a receptacle body that connects the components of the receptacle side 408.

The robotic system 300 may accommodate smaller payloads (e.g., overall dimensions less than 500 x 500 x 500 mm), while the robotic system 400 may accommodate larger payloads (e.g., mass of 25kg). Where larger payloads are accommodated, there may be an increase in the number of hold down release mechanisms 450, 452.

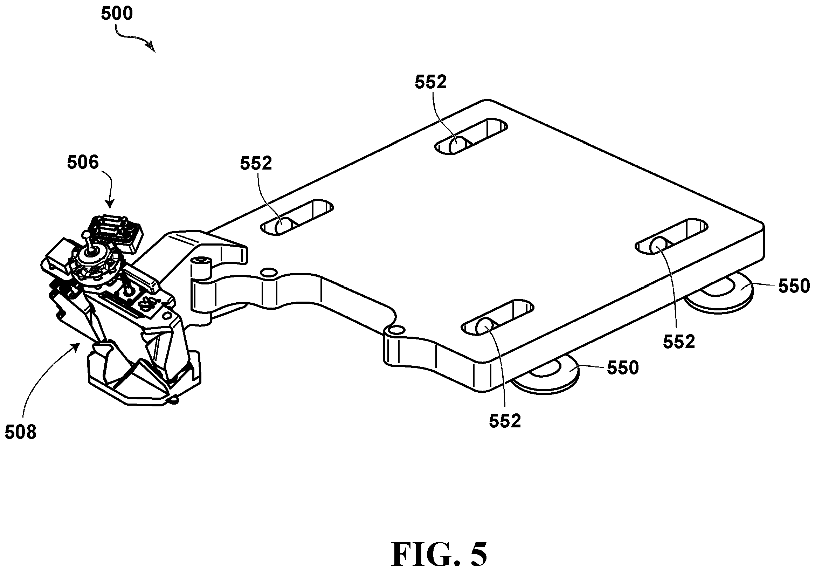

Turning to Figure 5, illustrated therein is a robotic system 500, in accordance with an embodiment. The robotic system 500 may be a relatively large orbital replacement unit including a large platform 510 and a plurality of HRMs 550, 552. The robotic system 500 may be the robotic system 100 as described with reference to Figures 1 and 2.

By way of example only, the robotic system 500 may accommodate a payload mass of up to 150 kg and a volume of 1000 x 1000 x 925 mm.

The robotic system 500 includes a platform side 506 and a receptacle side 508. The platform side 506 may be, for example the robotic side 106, 306, 406. The receptacle side 508 may be, for example, the receptacle side 108, 308, 408.

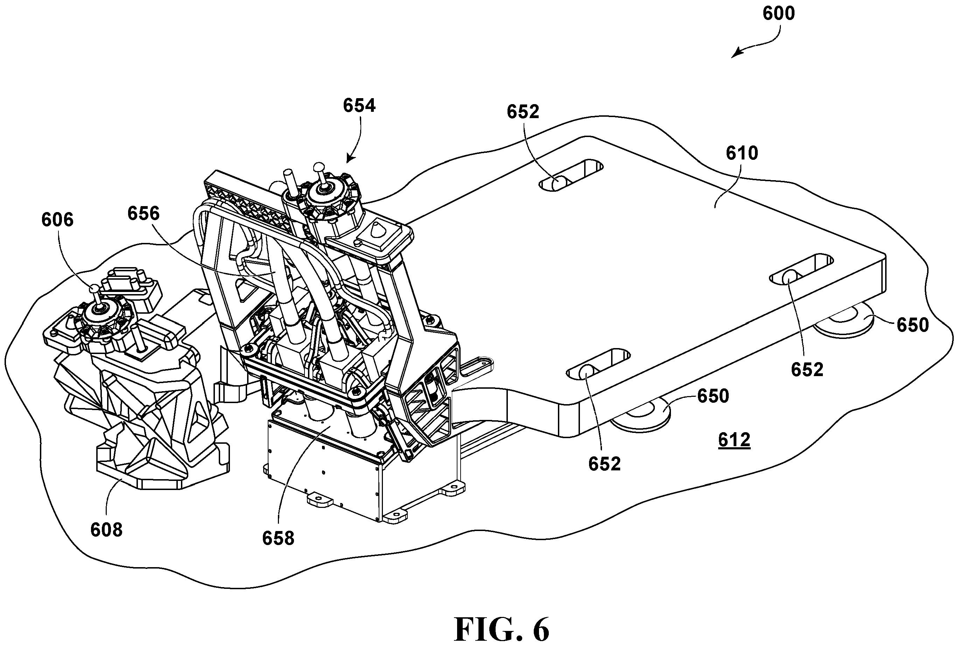

Turning to Figure 6, illustrated therein is a robotic system 600, in accordance with an embodiment. The robotic system 600 may be a relatievely large orbital replacement unit including a large platform or a payload location 610 and a plurality of HRMs 650, 652.

The robotic system 600 includes a platform side 606 and a receptacle side 608. The platform side 606 may be, for example the robotic side 106, 306, 406. The receptacle side 608 may be, for example, the receptacle side 108, 4608, 308.

The robotic system 600 may accommodate auxiliary services interface (ASI) 654. The ASI 654 may be on any of the robotic systems 100, 300, 400, 500, described above. The ASI 654 provides the capability to mate and de-mate a plurality (e.g., 4) of fluid lines 656. The ASI 654 provides the capability to mate and de-mate a plurality (e.g., 4) of high-power electrical connectors 658 between a host 612 and a payload positioned on a large platform 610.

The robotic system 600 may be the robotic system 100 as described with reference to Figures 1 and 2.

The robotic systems 100, 300, 400, 500, 600, may be implemented in a modular fashion to facilitate operation for a variety of payloads and use cases. The robotic systems 100, 300, 400, 500, 600, may be a standardized building-block subsystem. The robotic systems 100, 300, 400, 500, 600, may enable payloads to be handled via EVR in a similar manner, which may allow for greater autonomy. The robotic systems 100, 300, 400, 500, 600, may include additional panels and HRMs to enable larger and higher mass payloads to be launched and supported via EVR on-orbit.

Referring again to Figure 1, the vision system 130 provides robotic observation of the alignment target 132. The vision system 130 may be a machine vision system to facilitate visual-servo operation and bridge the gap between blind-positioning of the end effector 112 and its final alignment goal on the receptacle side 108. The end effector 112 includes an externally-mounted visible-spectrum camera, appropriately configured/positioned and kitted with optics to meet the performance needs of the vision system 130. The end effector camera may enables six degree of freedom pose estimation using vision algorithms and tip-space motions using flight-proven visual servo control routines. To provide for fault tolerance, the vision system 130 may also include a second, redundant camera. The vision system 130 may work in low lighting conditions, and the vision system 130 includes lighting.

The end effector camera has resolution, frame rates and related data transfer capabilities to meet the needs of the client visual servo system. To reduce operations sensitivity to lighting conditions, imaging sensors may also have dynamic range and be configured to work in full sun, full eclipse, and conditions in-between.

To provide a uniform, camera-incident lighting at the vision target 132, the current end effector lighting may use a high-intensity, low-power LED lighting array co-located with the end effector 112 cameras.

As shown at Figure 2, the grapple mechanism 114 includes the latch mechanism / grappler 118. The latch mechanism 118 is a component of the latch system.

The latch mechanism 118 may include a ready-to-latch indication. In this embodiment, this signalling is accomplished by the detection of the presence of the hemispherical head of the grapple fixture 116 grapple probe 120 inside the capture envelope by redundant microswitches activated by a link bar.

The latch mechanism 118 may include a soft capture of the grapple fixture 116. The latch mechanism 118 may include soft capture jaws that close around the hemispherical head of the grapple probe 120. The soft capture removes the three translational degrees of freedom.

The latch mechanism 118 may include a seating of the end effector (e.g., the removal of lateral and angular offsets between the grapple fixture 116 and the end effector 112). Seating is accomplished through retraction of the latch drive, drawing the grapple probe 120 further into the grapple mechanism 114. Retraction continues until the alignment features of the grapple mechanism 114 and grapple fixture 116 are fully seated.

The latch mechanism 118 may include an application of preload once the grapple mechanism 114 and grapple fixture 116 are fully seated together.

During the retraction of the latch mechanism 118, the initial travel closes the soft-capture jaws around the grapple probe 120 head. Continued retraction of these jaws draws the grapple probe 120 head further into the grapple mechanism 114 until the alignment features on the grapple mechanism 114 and grapple fixture 116 are fully seated. Retraction continues past this point, compressing a Belleville washer stack or similar compressive springs. This provides the preload at the grapple mechanism 114 and grapple fixture 116 interface. The motion of the latch mechanism 118 stops at a preset position that provides a minimum preload.

The alignment features 122 on the grapple mechanism 114 guide the alignment features 124 on the grapple fixture 116 toward the latching soft-capture envelope. This enables the soft capture of the grapple fixture 116 with only linear translation of the grapple mechanism 114 (where the grapple mechanism 114 and the grapple fixture 116 are within the allowed misalignment range). More specifically, the alignment features 122 and 124, respectively, on the grapple mechanism 114 and grapple fixture 116 may perform any one or more of during capture operation, allow a misalignment window about the grapple probe 120, and perform guiding functions without adding significant force or energy to the joints during the grapple mechanism 114 - grapple fixture 116 capture process.

Turning again to Figure 1, the torque mechanism 126 provides mechanical power transfer to the payload. The torque mechanism 126 on the end effector 112 is the mechanical interface to the torque receptacle of the tie down bolt 128 on the platform side 106. During typical capture of the grapple fixture 116 by end effector 112 with nominal misalignment, the torque mechanism 126 may capture and guide the torque receptacle to seat in the socket without adding more steps in the latching operation. When the torque mechanism 126 and the tie down bolt 128 are seated, the torque mechanism 126 accommodates manufacturing, thermal, and load-induced variances. The torque mechanism 126 may transfer torque under misalignment caused by manufacturing, thermal, and load-induced variances.

The torque mechanism 126 may be a hex socket that mates with the torque receptacle on the tie down bolt 128. The hex socket may be mounted on the torque mechanism 126 via an Oldham coupling, so as to provide accommodation for lateral misalignments.

The torque mechanism 126 may has a concave cone-shaped guide that guides the grapple fixture 116 torque receptacle bolt head into the hex socket. The cone-shaped guide may be large enough that it contacts the grapple fixture 116 torque receptacle bolt in a misalignment between the end effector 112 and the grapple fixture 116 during grappling and latching. In addition to the lateral compliance provided by the Oldham coupling, the torque socket may also have axial compliance provided by the axial compliance spring.

A drive train of the torque mechanism 126 delivers torque services to the payload. The drive train of the torque mechanism 126 may include an actuator and gearbox that can provide the torque at an output speed. The drive train of the torque mechanism 126 may include additional drive gears designed to achieve the desired backlash. The drive train of the torque mechanism 126 may include a spline connection to the torque socket.

The grapple fixture 116 includes the compliant grapple probe, and its compliant ball joint ("knuckle"). The grapple fixture 116 may enable the soft capture of the grapple fixture 116 with only linear translation of the end effector 112. The grapple fixture 116 may be compliant. The grapple fixture 116 includes the grapple probe 120, which is the initial contact point between the end effector 112 and the grapple fixture 116 during the latching sequence. In case of misalignment, the grapple probe 120 contacts the conical ramp on the end effector 112 and is guided toward the center of the latch mechanism.

The compliant ball joint has a spring-loaded mechanism that allows the grapple probe 120 to pivot around the grapple base during latching. This mechanism is self-centering. The grapple base houses the compliant ball joint and its spring-loaded mechanism (compliance spring).

In an embodiment, the grapple fixture 116 torquer extension socket is incorporated with the tie down bolt 128, such that torquer 126 drives the grapple fixture 116 extension socket, and the extension socket drives the input drive shaft.

The electrical connections 140, 142 from the grapple fixture 116 (i.e., from the end effector 112 to the payload 110) may be flying leads for the payload provider to route and connectorize. In an embodiment, the electrical connections 140, 142 may be routed through the housing body 144, 146.

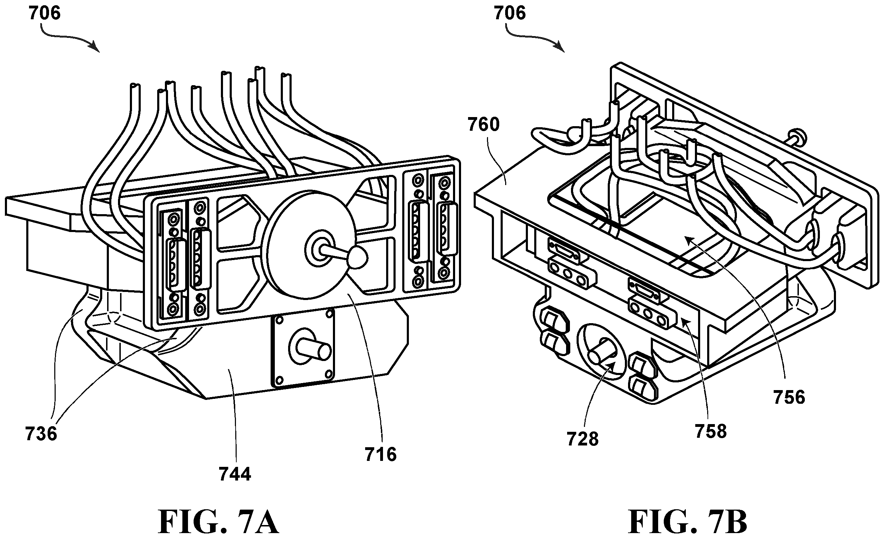

Referring now to Figures 7A and 7B, illustrated therein is a platform side 706, in accordance with an embodiment. The platform side 706 may be the platform side 106.

The platform side 706 includes alignment features 736 (e.g., alignment features 136). The platform side 706 includes body 744 (e.g., body 144). The platform side 706 includes a grapple fixture 716 (e.g., grapple fixture 116). The platform side 706 includes tie down bolt 728 (e.g., body 128). The platform side 706 includes umbilical connectors 756 (e.g., 656). The platform side 706 includes electrical connectors 758 (e.g., 658). The platform side 706 includes a mounting interface 760 for mounting to a platform.

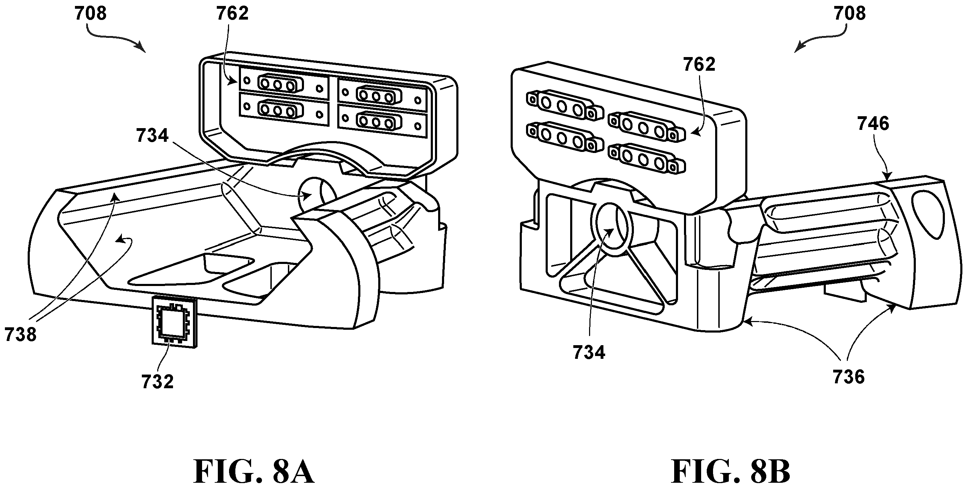

Referring now to Figures 8A and 8B, illustrated therein is a receptacle side 708, in accordance with an embodiment. The receptacle side 708 may be the receptacle side 108.

The receptacle side 708 includes a vision target 732 (e.g., vision system 132). The receptacle side 708 includes receptacle alignment features 738 (e.g., receptacle alignment features 138). The receptacle side 708 includes a tie down receptacle 734 (e.g., tie down receptacle 134). The receptacle side 708 includes a body 746 (e.g., body 146). The receptacle side 708 includes electrical connectors 742 (e.g., electrical connectors 142). The receptacle side 708 includes a mounting interface 762).

The platform side 706 includes the tie down bolt 728 includes a drive shaft, which engages directly with the end effector torquer. In an embodiment, the grapple fixture 716 torque receptacle is also used as an intermediate device. The drive shaft may only rotate in place, and may not translate while being driven by the torquer.

The tie down bolt 728 includes a threaded shaft that has a sliding rotational coupling to the drive shaft. The threaded shaft has an internal thread that causes it to extend half-way when the drive shaft is rotated. The threaded shaft also has an external thread that engages a floating tie-down receptacle nut shown. The internal thread extends the threaded shaft so that the threads can reach and engage the tie-down receptacle nut. Once the external threads of the threaded shaft have engaged the tie-down receptacle nut, the internal threads run out, and are no longer engaged. The threaded shaft is pulled in by the tie-down receptacle nut. Where there is no receptacle nut 734, (or the nut cannot be engaged) then the threaded shaft cannot extend beyond half way. It will re-engage the internal thread and retract if the drive shaft is rotated in the other direction.

The tie down bolt 728 includes an umbilical bracket and connectors. The umbilical bracket translates with the threaded shaft. The umbilical bracket moves the connectors closer, but will not engage them while the threaded shaft is still being driven by the internal threads. Once the threaded shaft is being pulled by the tie-down receptacle nut, then the umbilical connectors are inserted to make electrical contact. Full contact of the connectors and compliance preload is achieved when the shoulder on the threaded shaft has engaged and partially flattened compression (e.g., Belleville or similar) springs in the tie-down mechanism. The Belleville springs, for example, are used to sustain the desired preload between the platform side 706 and the receptacle side while accounting for machining tolerances and thermal expansion.

The electrical connectors 758 on the platform side 706 are on a floating arrangement on a connector compliance mechanism within the platform side 706 housing, mounted to the umbilical bracket as described above. The platform side 706 connectors are receptacles, featuring guide pins to fine align with the fixed connectors 762 on the receptacle side 708.

The connector compliance mechanism may be conceptually the same as described for the end effector, with geometry differences due to the differences in connector packaging between the platform side 706 and the end effector. The connector compliance mechanism may be placed on the driven side (i.e. the platform side 706) to minimize receptacle side 708 complexity, mass and volume. While this complicates the driven (platform side 706), this side is included fewer times in the overall system and thus saves on overall mass, volume and cost. This allows the receptacle side 708 to be as small, light, and simple as possible.

The wedge shape of the alignment features 736 are designed into the main structure of the robotic system, and allows the robotic system platform to comply with insertion forces. The steep wedge shape of the alignment features 736 allow for small tip loads to generate side loads and active compliance of the arm during mating.

Advantageously, since the loads of the robotic system in five of the six axes are reacted by structure, as opposed to mechanisms, the architecture may be robust and strong. The tie-down accounts for the last axis, and its load is taken up by the threaded shaft and the Belleville springs, in an embodiment. With these features, the robotic system interface may be strong, low mass, stiff, and features easy insertions and extractions, allowing for interface mating repeatability.

To support the robotic seating portion of the robotic system concept of operations, the alignment features 736, 738 on the robotic system act as guides that provide feedback. This feedback facilitates autonomous berthing and unberthing of the robotic system interfaces.

The robotic system is based on a wedge-mating interface (WMI), and has the same alignment features as the WMI. The alignment feature 736 is the wedge shape of the platform 706 and receptacle 708. The platform (platform side 706) is the "male" wedge and the receptacle (receptacle side 706) is the "female" wedge. The wedge shape allows a capture envelope (e.g., 15 mm lateral and 5° roll and wobble). A large capture envelope reduces the accuracy requirement on the visual servo procedure that is used to bring the platform side 706 and receptacle side 708 into position for capture.

The robotic system alignment feature is that contact between the platform and receptacle is through a plurality (e.g., 8) accurately positioned and aligned contact pads. These pads, and the receptacle side 706 wedge ramps, may be lubricated and able to support a number of mate and de-mate cycles. The wedge shape 736, 738 of the robotic system may be a reliable way to support the robotic seating portion of the robotic system.

The vision target 732 may enable six degree of freedom information to be extracted from end-effector camera views via image processing. The vision target 732 includes a planar base with a central black square surrounded by a white stripe. A black post with a white top is mounted in the center of the black square; the location of the post tip in images allows accurate estimation of the relative pitch and yaw.

Attached to the base plane's white stripe are data bits, which encode the marker identity, which can be used in turn to perform any one or more of automatically identify the target ID as a way for independent verification that the manipulator trajectory placed the end-effector above the expected grapple fixture as defined in the mission plan; automatically identify the type of fixture being grasped, such as identifying whether the target is associated with a base location or a payload; automatically identify the payload size/mass category for automatic control system adjustment; and automatically identify whether the payload/fixture has electrical services for mating and de-mating the end effector umbilicals.

The tie-down receptacle 734 on the receptacle side 708 engages with the tie-down mechanism 728 on the platform side 706 in order to secure the platform side 706 and the receptacle side 708 together. The tie-down receptacle 734 may have the ability to react the preload required to secure the platform side 106 and receptacle side 708 together, providing a mated stiffness. The tie-down receptacle 734 may have the ability to accommodate thermal and manufacturing variances in the platform side 706 tie-down mechanism 728. The tie-down receptacle 734 may have the ability to satisfy the cycling and life mission.

The tie-down receptacle 734 may be a locking tie-down nut that is floating within a shell. As the tie-down bolt is driven forward by the end effector torquer, the tie-down bolt engages the threads of the tie-down nut. The threads of the tie-down nut are sized to accommodate the preload. The shell provides clearance around the tie-down nut to accommodate thermal and manufacturing variances. The tie-down nut is held in-place within the shell by a retaining ring on the external side of the platform side 106.

The connectors 742 on the receptacle side 708 are fixed in place on a common mounting bracket, and mate with the floating connectors on the platform side 706. The baseline concept has four connectors: prime and redundant power, and prime and redundant data. The receptacle side 708 connectors may be plugs with guide bushings that interface with the platform side 706 connector guide pins for fine alignment. Worksite cabling (not shown) from the receptacle side 708 connectors is routed and connectorized on a worksite-specific basis.

The vision target 732 is compatible with both the prime/redundant cameras. To improve the robustness of the machine vision system, target features are designed for maximum contrast and operation over a wide variety of incidence angles. To minimize light-level requirements at the target working distance in eclipse, as well as improve contrast performance during full sun conditions, portions of the target are retroreflective.

The receptacle side 708 vision target may be identical to a target located on the grapple fixture 716, but is separated from the robotic system version of the grapple fixture 716 and is directly mounted on the receptacle side 708. When the receptacle side 708 and platform side 706 are mated, the geometry of the vision target with respect to the grapple features on the grapple fixture 716 is the same as the geometry of the full grapple fixture 716. This geometric consistency may facilitate the grappling of the end effector to the platform side 706 grapple fixture 716. When the end effector extracts the platform side 706 from the receptacle side 708, the vision target 732 is left behind on the receptacle side 708.

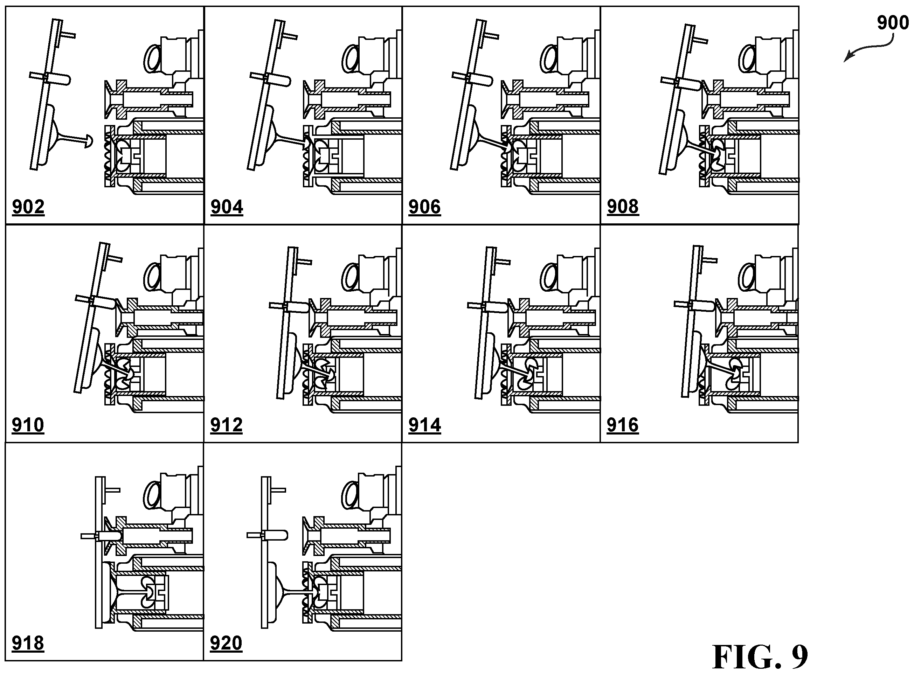

Referring to Figure 9, illustrated therein is a method 900 for connecting an end effector (e.g., end effector 112) to a grapple fixture (e.g., grapple fixture 116), in accordance with an embodiment.

Precursor to this capture sequence includes the use of digital encoder readings to navigate the dexterous manipulator arm (blind approach) until the grapple fixture 116 target is within the field of view and working distance of the end effector 112 vision system. At this point, the system undergoes a transition to visual servo using photogrammetric vision system-based pose estimation -based pose estimation. Visual servo terminates upon receipt of the ready-to-latch (RTL) signal. The dexterous manipulator arm active compliance is initiated, and capture/latching proceeds.

At 902, the end effector 112 is offset from the center of the grapple fixture 116 grapple probe laterally, and is angularly offset about the grapple probe tip.

At 904, the arm with the end effector 112 at its distal end is commanded in a straight line along the longitudinal axis of the end effector 112. Initial contact of the end effector 112 with the grapple fixture 116 grapple probe tip occurs at 904. Specifically, the grapple probe tip makes contact with the concave alignment feature in the end effector 112 grappler front face.

At 906, the grapple fixture grapple feature probe shaft has light centering springs at the base 'knuckle' connection to the grapple feature body that accommodate the misalignment offset beginning at initial contact. The end effector 112 front surface begins to guide the tip of the grapple feature shaft to the capture latch.

At 908, the grapple feature shaft deflects as the end effector 112 continues to move towards the grapple fixture 116. The deflection allows the hemispherical tip of the probe to reach the capture latch location without reduction of the lateral or angular misalignments - no energy is built up in the system, and the arm does not need to correct the misalignments. During this phase of the grapple, the end effector 112 socket drive may come into contact with the grapple fixture 116 torque receptacle. The compliance spring (not shown) and concave lead in of the socket drive accommodates this contact. In this case the socket drive on the end effector 112 is pushed back out of interference with the socket receptacle.

At 910, the grapple feature shaft tip has reached the shallow end of the capture position range. A sensor will detect that the grapple feature shaft tip is in this range, at which point the arm command can be ceded and the next stage of capture can begin.

At 912, the grapple feature shaft tip has reached the deep end of the capture position range. This will occur without requiring a change in the lateral offset and orientation of the end effector 112 (arm tip) relative to the grapple fixture 116. Minimal energy will have been built up in the system.

At 914, the grapple feature shaft tip is sensed by the capture mechanism, and the end effector 112 latch drive activates. The initial motion closes the jaws around the hemispherical tip of the probe to achieve "soft" capture. Three degrees of freedom have now been constrained (linear motion), while three remain free (angular motion). There is effectively no built up energy so there is no predilection for motion.

At 916, during retraction, the angular and lateral offsets are removed by drawing the end effector 112 alignment features over the grapple fixture 116 alignment features. The loads generated at the interface and thus the energy stored is dependent on the stiffness of the arm system and the ability for either an active or passive "limp" state to allow the robotic arm to 'follow' the end effector 112 down over the grapple fixture 116.

At 918, final capture is achieved when the capture mechanism is retracted to the point where the grapple fixture is preloaded against the alignment features on the front of the end effector 112.

Where the hex torque features are not aligned at final capture the compliance spring of the socket drive remains compressed and the socket drive will 'snap' into mate with the torque receptacle as soon as the hex features align during driving of the socket drive. The final capture position of the grappler includes a compression of a compliant member - a spring assembly - to generate final interface preload. This compliance allows for variation of manufacturing tolerances and changes in shape of the grapple fixture 116 and end effector 112 due to thermal effects without having a significant effect on the preload, and thus on the capacity for the interface to handle external loads.

At 920, to release, the end effector 112 grappler is driven to the fully forward position to drive the jaws open and allow the interface to separate fully. The arm is commanded to move in the opposite direction as the grappler drive train in order to let go cleanly, without imparting a significant push load.

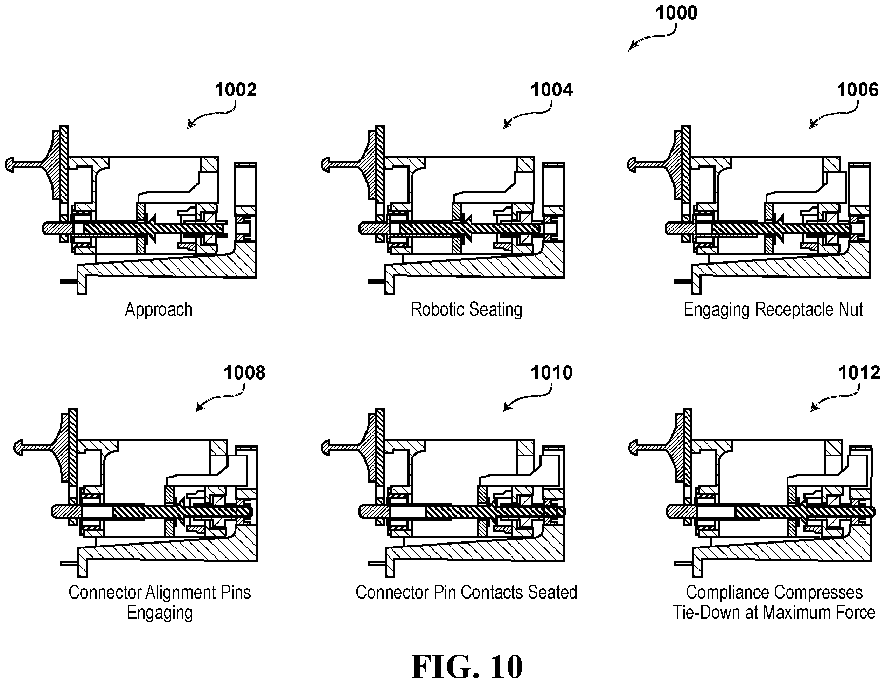

Referring to Figure 10, illustrated therein is a method 1000, for mating and de-mating a robotic system (e.g., robotic system 100), in accordance with an embodiment.

Payload capture and de-mating includes, the end effector 112 on the manipulator in question (either the dexterous manipulator arm end effector 112 or the end effector 112 of the Dexterous Adaptor Tool + large manipulator arm) will capture the grapple fixture 116 on the platform side 106 of the payload. The payload will be disengaged from the receptacle side 108 at its stowage location using the reverse of the procedure that is about to be described.

At 1002, the manipulator will maneuver the payload to a high hover position in front of the receptacle side 108 to which the payload is to be installed. For this step, the blind positioning accuracy of the arm must be sufficient to bring the payload to within the extents of the Approach Envelope. This condition is fulfilled when the receptacle side 108 vision target is within the field of view (FOV) and working distance of the end effector 112 vision system.

The operation of the manipulator will undergo a transition to Visual Servo mode, in which feedback from the end effector 112 cameras is used to bring the platform into alignment with the receptacle in accordance with the Capture Envelope (i.e., within 15 mm lateral offset and 5 degrees of roll and wobble).

At 1004, once initial contact is made, a command is issued to initiate auto-FMA (force/moment accommodation). This algorithm minimizes all moments and side loads (forces other than those along the axial i.e., x direction). The platform is driven inward, while the manipulator maintains the minimum axial insertion force necessary to seat it.

At 1006, once the platform is within the envelope of the robotic system 100 tie-down mechanism, the end effector 112 torquer drive will rotate the tie-down bolt. The tie-down bolt and the connector umbilical mechanism will be pushed, using the tie-down bolt's internal threads, until it reaches and engages the tie-down receptacle nut. The bolt will then transition from being pushed by the internal thread to being pulled by the external tie-down nut thread. During 806, the manipulator switches to position hold mode and maintains insertion force.

At 1008, if necessary, once the external tie-down nut thread is engaged the umbilical mechanism will be driven. Specifically, the tie-down bolt will continue to extend and the connector umbilical mechanism will begin to draw the connectors closer together.

At 1010, the process in the previous step continues until the insertion command is fully terminated via torques or turns. Electrical continuity is established at 810.

At 1012, the tie-down force will be at the desired level and the compliance mechanism compressed. At 812, the umbilical mechanism is already fully mated and there is a spring force from the umbilical compliance mechanism keeping the connectors fully mated. The interface is now fully mated and secured, and the end effector 112 can un-grapple and move away. To de-mate the robotic system 100 platform and receptacle, this process is reversed. The umbilical is disengaged using the umbilical mechanism. The torquer is rotated in order to disengage the tie-down mechanism. This rotation is terminated based on torques and turns. Then, the system is commanded in order to initiate auto-FMA, and back out to the edge of the Capture Envelope. Finally, the manipulator drives the payload and platform side 106 back out to the edge of the Approach Envelope. In order to troubleshoot electrical issues, the insertion process can be stopped after the tie-down bolt is engaged to the tie-down receptacle nut, but before the connectors make electrical contact. I.e. the process may cease after 1008. The robotic system 100 can remain in this state for a short period of time to support troubleshooting measures.

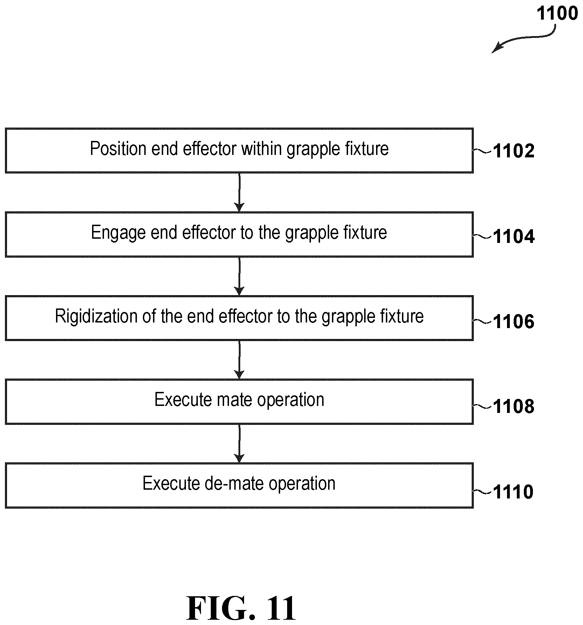

Referring to Figure 11, illustrated therein is a method 1100 for connecting an end effector (e.g., end effector 112) to a grapple fixture (e.g., grapple fixture 116), in accordance with an embodiment.

At 1102, the manipulator positions the end effector 112 interface within the guaranteed latching envelope of the grapple fixture 116 interface. Initial positioning and interface alignment will be performed with standard manipulator operations. Motion between the approach position and final latch position will be assisted by alignment system(s) (nominally a machine vision system, i.e., image sensors on the active interface and targets on the passive interface permitting autonomous approach and capture operations).

At 1104, the manipulator engages the end effector 112 to the grapple fixture 116 while the arm is commanded to a limped-mode that actively minimizes joint torques, as end effector 112 and grapple fixture 116 interface relative misalignments are eliminated (grapple fixture 116 is engaged).

At 1106, the end effector 112 executes a rigidization (latching) operation, securing the end effector 112 to the grapple fixture 116 with sufficient preload to accommodate the design loads, and to maintain minimum required interface stiffness.

At 1108, the end effector 112 interface executes a mate operation, to drive the end effector 112-mounted connectors forward to engage the grapple fixture 116 mounted connectors (to mated state). Connector mating enables the manipulator to transfer and/or receive power and/or data/video to tools/payloads at the manipulator tip from manipulator base.

At 110, de-mate, de-rigidize, and decoupling operations are performed in the reverse order to 1102 through 1108.

While the above description provides examples of one or more apparatus, methods, or systems, it will be appreciated that other apparatus, methods, or systems may be within the scope of the claims as interpreted by one of skill in the art.

## Claims

1. A robotic system comprising:
a payload interface comprising a platform side and a receptacle side;
wherein the platform side is robotically maneuverable, and adaptable to carry a payload; and
wherein the receptacle side is affixed to a host structure.

2. The robotic system of claim 1, wherein the payload interface is autonomously removed and replaced by a robotic manipulator.

3. The robotic system of claim 2, wherein the robotic manipulator includes an end effector having a grapple mechanism that connects with a grapple fixture of the platform side.

4. The robotic system of claim 3, wherein the grapple mechanism includes a latching mechanism that grapples a grapple probe of the grapple fixture.

5. The robotic system of claim 3 or 4, wherein the grapple mechanism includes alignment features that align with alignment features of the grapple fixture and / or
wherein the end effector includes a torque mechanism for providing torque to a tie down bolt of the platform side.

6. The robotic system of claim 5, wherein the platform side includes the tie down bolt which ties down to a tie down bolt receiver/receptacle of the receptacle side.

7. The robotic system of one of claims 3 to 6, wherein the end effector includes a vision system that images a vision target of the receptacle side to aid in manipulation of the platform side.

8. The robotic system of one of claims 3 to 7, wherein the platform side includes alignment features that align with receptacle alignment features of the alignment side; and wherein the alignment features include a wedge mating interface that mates with the wedge mating interface of the alignment feature.

9. The robotic system of one of claims 3 to 8, wherein the platform side includes electrical connectors that electrically connect to electrical connectors of the receptacle side to transmit power and/or data.

10. The robotic system of one of claims 1 to 9, wherein the robotic system is used for robotic mating/de-mating of interfaces in space applications or nuclear applications.

11. The robotic system of one of claims 3 to 10, further comprising an auxiliary services interface that mates and de-mates a plurality of any one or more of fluid lines and electrical connectors between the host structure and the payload.

12. A method for mating and de-mating a robotic system, the method comprising:
maneuver a payload to a receptacle side to which the payload is to be installed to make contact;
once initial contact is made, a platform is driven inward; and
once the platform is within an envelope of a robotic system tie-down mechanism, an end effector torquer drive will rotate a tie-down bolt.

13. The method of claim 12 further comprising positioning an end effector within a grapple fixture.

14. The method of claim 12 or 13 further comprising engaging the end effector to the grapple fixture.

15. The method of one of claims 12 to 14 further comprising rigidizing the end effector to the grapple fixture.
